# EUROPEAN PATENT SPECIFICATION

(11) **EP 3 056 266 B1**
(45) Date of publication and mention of the grant of the patent: **22.08.2018**
(21) Application number: 14839027.1
(22) Date of filing: 18.04.2014
(51) Int. Cl.: G21C 17/022, B01J 8/00, B01F 1/00, G21C 19/28, G21C 1/02, G21C 15/00

(54) **MASS TRANSFER APPARATUS**
MASSENTRANSFERVORRICHTUNG
APPAREIL À ÉCHANGE DE MASSES

(30) Priority: 26.08.2013 RU 2013139258
(43) Date of publication of application: 17.08.2016
(73) Proprietor: Joint Stock Company "Akme-Engineering", Moscow 115035 (RU)
(72) Inventor: MARTYNOV, Petr Nikiforovich, Kaluzhskaya obl. g. Obninsk 249030 (RU); ASKHADULLIN, Radomir Shamilievich, Kaluzhskaya obl. g. Obninsk 249030 (RU); SIMAKOV, Andrey Alekseevich, Kaluzhskaya obl. g. Obninsk 249030 (RU); LEGKIKH, Aleksandr Urievich, Kaluzhskaya obl. g. Obninsk 249030 (RU)
(74) Representative: Mitev, Mitko Karushkov
(86) International application number: PCT/RU2014/000282
(87) International publication number: WO 2015/030625

(56) References cited:
- JP-A- 2003 057 390
- JP-A- 2003 185 788
- RU-C1- 2 246 561
- RU-C1- 2 246 561
- RU-C1- 2 481 140
- US-B2- 8 153 840

## Description

### Engineering range designed to apply this invention

The Mass transfer apparatus refers to the power engineering and can be used at the power units with the liquid metal coolant containing lead.

### Engineering level

The most similar to the stated engineering solution is the Mass transfer apparatus under the patent to the invention (RF # 2246561, C23F11/00, 20.02.2005) consisting of the enclosure and placed-in flow reaction chamber filled with the solidphase grained oxidation substance, power heating unit located in the reactor, perforated grating for the enriched liquid metal coolant release that is located above the reactor and served to release the oxygenated liquid metal coolant, the perforated grating to supply the liquid metal coolant to the reactor. The return line is the ring duct. The enclosure is located inside the cylindrical course with the slot to intake the coolant, and it forms the ring duct, the cylindrical course bottom end is plugged, its upper end is partially closed by the ring-shape baffle plate.

The downside of the stated equipment is the limited operation time defined by the solidphase oxidation substance stock. Extension of the operation by increasing the volume and loading of the reactor will lead to the expanding of the power consumption as with increasing of the reactor volume it requires to uplift the heater sizes and capacity. Moreover there are complications with the maintenance of the Mass transfer apparatus as when the apparatus is released for the reactor recharging the liquid metal coolant is at the same time taken out filling the apparatus and cylindrical course.

### Invention description

The invention is aimed to produce the Mass transfer apparatus providing the sufficient work efficiency with the one-time loading of the solidphase grained oxidation substance without increasing the power consumption under the liquid metal coolant enriching mode. Another target of this invention is to produce the Mass transfer apparatus of this type to decrease the quantity of the released liquid metal coolant. To get this target achieved it is suggested using of the below-mentioned Mass transfer apparatus.

The technical result is increasing the operation and service life of the Mass transfer apparatus, reduction of the power consumption, ensuring its placement in the limited space, ensuring automatic feeding of freshly prepared oxidation substance, and ensuring removal of liquid metal carrier from the apparatus when it is being removed.

The following important properties of the Mass transfer apparatus impact on the engineering results of the Mass transfer apparatus.

The Mass transfer apparatus contains the enclosure and placed-in flow reaction chamber filled with the solidphase grained oxidation substance fitted with the controlled heating system, oxidation substance input/output system; and the apparatus enclosure has the storage with the reserved oxidation substance fitted-in.

As the controlled heating system of the Mass transfer apparatus the electrical heater is used of the core-type; the heating element of the electrical heater - high-resistant wire made of nichrom or fechral.

The storage with the reserved oxidation substance consists of the bottom and side wall formed by the enclosure bottom section, and there are slots at the upper part of the side wall adjacent to the reactor. Moreover the side wall bottom the storage with the reserved oxidation substance is slotted.

The storage with the reserved oxidation substance is located below the reactor and the lower end of the electrical heater. Apart under the initial state the storage with the reserved oxidation substance is filled with the oxidation substance.

The flow reaction chamber is formed by the middle section of the enclosure bound underneath with the upper part of the storage and at the top - slotted restricting grating.

The oxidation substance input system is created by side wall upper section of the storage with the reserved oxidation substance.

The oxidation substance output system consists of the reactor grating and slotted wall of the Mass transfer apparatus wall and is located above the reactor.

The oxidation substance is the solidphase grained type. The grained lead oxide is used as the solidphase oxidation substance.

All the holes (slots), excluding the slots in the enclosure walls of the Mass transfer apparatus used for the oxidation substance output, are of the notches type with the width less the particles size of the solidphase oxidation substance.

The Mass transfer apparatus is placed laterally in the oxidated material tank.

The availability of the storage with the reserved oxidation substance allows for the Mass transfer apparatus increasing its service life as the feeding of the reactor with the oxidation substance particles, preferably, grains is provided upon the stock-out of those part loaded in the reactor. Having that the power consumption is not increased as the reactor capacity and heater size is not changed.

The slotted bottom of the storage with the reserved oxidation substance provides the removal of the oxidated material (liquid metal coolant) from the apparatus when it is released.

The lead oxide has the density lower the pure lead, the lead oxide grains are injected to the reactor by the buoyancy force providing the automatic supply of the fresh oxidation substance until the lead oxide grains are fully used. The restored lead is released by the liquid metal coolant flow.

The brief description of the drawings:

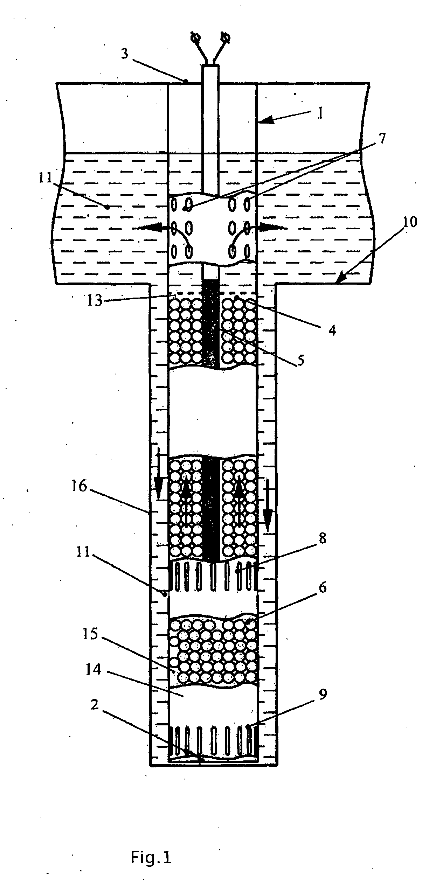

The Fig. 1 shows the Mass transfer apparatus design (Fig.1)

### Invention operation

The following legends are used on the drawings: 1-enclosure; 2-bottom, 3-lid; 4-perforated grating; 5 - electrical heater; 6 - solidphase grain oxidation substance; 7- outlet; 8 - inlet; 9 - drain vent; 10-capacity with the coolant; 11 - coolant; 13 - flow reaction chamber; 14 - bottom part of the storage with the reserved oxidation substance (sleeve); 15 - storage with the reserved oxidation grained substance; 16 - void for the Mass transfer apparatus.

The Mass transfer apparatus consists of the tank formed by the enclosure 1 and bound with the bottom 2 and the ring-type lid 3. The tank has the flow reaction chamber 13 located inside the tank below the liquid metal coolant level and bound with the perforated grating at the top. The perforated grating 4 is designed to restrain the sold-phase grained oxidation substance 6 from the upfloat under the buoyancy force. The oxygen enriched liquid metal coolant is released from the Mass transfer apparatus and mixed with the coolant of the basic loop.

The solid phase oxidation substance 6 allocated under the grating 4 and interacting with the liquid metal coolant is dissolved enriching it with the oxygen.

The heater 5 located in the reactor 13 and passing through the perforated grating 4is designed to heat the coolant in the reactor 13.

The inlets 8 are located in the enclosure wall 1 at the level of the electrical heater bottom end 5 so when the Mass transfer apparatus is operated the liquid metal coolant moves basically through the solid phase oxidation substance layer located in the reactor 13 at the gap between the enclosure 1 and electrical heater 5.

The enclosure 1 below the reactor is made as the sleeve type 14 with the bottom 2 where the storage 15 of the reserved oxidation grained substance 6 is placed-in.

The drain vents 9 set at the tank bottom are designed to arrange the drainage of the liquid metal coolant when the Mass transfer apparatus is taken out of the unit.

The outlets 7, inlets 8, drain vents 9 and the perforated grating are made as the notches with the size lower the solidphase oxidation substance grains.

During the operation the Mass transfer apparatus is immersed in the lead-containing coolant so the outlets 7 are below the liquid metal coolant level. The Mass transfer apparatus is placed in the unit tank providing the liquid metal coolant flow. If the height of the liquid metal coolant is not sufficient for immersion the Mass transfer apparatus enclosure in the tank is equipped with the sleeve 16 where the enclosure 1 is sunk. The liquid metal coolant flow through the sleeve 16 is provided by the liquid metal coolant flow through the radiator when the electrical heater 5 is operated.

The Mass transfer apparatus is operated as follows:
By starting the electrical heater 5 and the natural convection there the liquid metal coolant flow is generated through the solidphase grained oxidation substance 6 located in the flow reaction chamber 13in the gap between the enclosure 1 and electrical heater 5. The liquid metal coolant 11 is injected in the Mass transfer apparatus by the inlets 8 and moves bottom - upwards through the solidphase grained oxidation substance 6, located in the reactor 13. The solidphase oxidation grains integrating with the coolant are dissolved-in enriching the liquid metal coolant with the oxygen. The oxygen-enriched liquid metal coolant is released through the outlets 7 and mixed with the liquid metal coolant of the unit basic loop. The capacity value i.e. the oxygen value coming from the Mass transfer apparatus per time unit and it is adjusted by changing the electrical heater capacity. When the Mass transfer apparatus is operated the liquid metal coolant output through the solidphase oxidation substance is quite low, it is located in the storage 15 set in the sleeve 14 at the enclosure bottom between the bottom 2 and the reactor. When the operation is kicked-off, firstly, the solidphase grained oxidation substance layer is actuated, that is set in the reactor 13 at the gap between the Mass transfer apparatus enclosure 1 and the electrical heater 5 providing the coolant flow. This layer is under a high temperature so it sustains dissolving of the solidphase grained oxidation substance. As far the solidphase oxidation substance (lead oxide) density is lower the liquid metal coolant density so once the above-mentioned layer is actuated, the reserved solidphase oxidation substance placed-in the storage 15 is floated up and fill-in the free space in the reactor 13 between the Mass transfer apparatus enclosure and electrical heater.

Mass transfer apparatus operation example.

Engineering parameters of the Mass transfer apparatus and consumables:
enclosure 1: inside diameter - 64 mm, height - 1,500 mm, inlet and outlet size - 2 mm, inlet size - 10 mm, material - stainless steel 12X18H10T;
perforated grating 4: punching size - 2 mm, material stainless steel 12X18H10T;
Electrical heater 5: type - rod-type capacity is 7 KW, height of the heating part - 820 mm, heater enclosure diameter - 25 mm, heating element - nichrom wire (X20H80) diameter 1,6 mm;
5 solid phase oxidation substance 6: filling with the graining diameter 8-9 mm, material - lead oxide (PbO) brand «4» Specification 6-09-5382-88.
Lead-containing liquid metal coolant: lead-bismuth alloy, temperature - 340 °C.
Oxygen capacity (temperature at input 340 °C):1^{∼}r[o]/h.

## Claims

1. A mass transfer apparatus adapted to enrich the concentration of oxygen within a liquid metal coolant (11) at a power unit comprising an enclosure (1), a reaction chamber (13) placed within the enclosure (1) and filled with an oxidation substance, a controlled heating system fitted within the enclosure (1), oxidation material inlet (8) and outlet (7) systems, **characterized by** comprising a storage of the oxidation substance fitted within the enclosure (1).

2. A mass transfer apparatus as claimed in claim 1 **characterized in that** it has a rod-type electrical heater (5) as the controlled heating system.

3. A mass transfer apparatus as claimed in claim 2 **characterized in that** it has a high resistant nichrom or fechral wire as the heating element in the electrical heater (5).

4. A mass transfer apparatus as claimed in claim 1 **characterized in that** it has the storage (15) of the reserved oxidation substance made of the bottom (2) and sidewall formed by the enclosure (1) bottom section.

5. A mass transfer apparatus as claimed in claim 4 **characterized in that** it has slots at the top of the sidewall of the storage of the reserved oxidation substance.

6. A mass transfer apparatus as claimed in claim 4 having slots at the bottom of the sidewall of the storage (15) of the reserved oxidation substance.

7. A mass transfer apparatus as claimed in claim 1 **characterized in that** the storage of the reserved oxidation substance is located below the reaction chamber (13).

8. A mass transfer apparatus as claimed in claim 2 **characterized in that** the storage (15) of the reserved oxidation substance is located below the bottom end of the electrical heater (5).

9. A mass transfer apparatus as claimed in claim 1 **characterized in that** it has the flow reaction chamber (13) formed by the enclosure (1) middle section bound at the bottom (2) with the upper section of storage (15) of the reserved oxidation substance and at the top-with a perforated grating (4).

10. A mass transfer apparatus as claimed in claim 10 **characterized in that** the perforated grating (4) is slotted.

11. A mass transfer apparatus as claimed in claim 1 **characterized in that** it has the oxidation substance inlet system (8) formed with the sidewall upper section of storage (15) of the reserved oxidation substance.

12. A mass transfer apparatus as claimed in claim 1 **characterized in that** it has the oxidation substance outlet system (7) formed with the reaction chamber (13) perforated grating (4) and slotted wall of the apparatus enclosure (1).

13. A mass transfer apparatus as claimed in claim 13 **characterized in that** it has the oxidation substance outlet system (7) located above the reaction chamber (13).

14. A mass transfer apparatus as claimed in claim 1 **characterized in that** it has solidphase oxidation substance (6).

15. A mass transfer apparatus as claimed in claim 1 **characterized in that** it has solidphase grained oxidation substance (6).

16. A mass transfer apparatus as claimed in claim 1 **characterized in that** it has solidphase oxidation substance (6) consisting of grained lead oxide.

17. A mass transfer apparatus as claimed from any of claims 5, 6 and 11 **characterized in that** it has the slots made as notches with width less the solidphase oxidation substance (6) grains.

18. A mass transfer apparatus as claimed in claim 1 **characterized in that** its location laterally in the oxidation substance tank.

## Patentansprüche

1. Stoffaustauschapparat, umfassend ein Gehäuse und eine darin angeordnete Durchlaufreaktionskammer, gefüllt mit Oxidationsmittel, versehen mit einem regelbaren Heizsystem und einem System zum Ein- und Austritt des oxidierten Materials, **dadurch gekennzeichnet, dass** das Gehäuse des Apparats einen Speicher für Reserve-Oxidationsmittel aufweist.

2. Stoffaustauschapparat nach Anspruch 1, **dadurch gekennzeichnet, dass** ein Elektroheizer, insbesondere in Stabausführung, als regelbares Heizsystem zum Einsatz kommt.

3. Stoffaustauschapparat nach Anspruch 2, **dadurch gekennzeichnet, dass** im Elektroheizer als Heizelement Widerstandsdraht aus Nichrom oder Ferro-Chrom-Aluminium verwendet wird.

4. Stoffaustauschapparat nach Anspruch 1, **dadurch gekennzeichnet, dass** der Speicher für das Reserve-Oxidationsmittel aus einem Boden und einer Seitenwand, gebildet durch den unteren Gehäuseteil, besteht.

5. Stoffaustauschapparat nach Anspruch 4, **dadurch gekennzeichnet, dass** im oberen Teil der Seitenwand des Speichers für das Reserve-Oxidationsmittel, die an die Reaktionskammer anliegt, Öffnungen vorhanden sind.

6. Stoffaustauschapparat nach Anspruch 4, **dadurch gekennzeichnet, dass** im oberen Teil der Seitenwand des Speichers für das Reserve-Oxidationsmittel, die an die Reaktionskammer anliegt, Öffnungen vorhanden sind.

7. Stoffaustauschapparat nach Anspruch 1, **dadurch gekennzeichnet, dass** der Speicher für das Reserve-Oxidationsmittel unterhalb der Reaktionskammer liegt.

8. Stoffaustauschapparat nach Anspruch 2, **dadurch gekennzeichnet, dass** der Speicher für das Reserve-Oxidationsmittel unterhalb der unteren Stirnfläche des Elektroheizers liegt.

9. Stoffaustauschapparat nach Anspruch 1, **dadurch gekennzeichnet, dass** die Durchlaufreaktionskammer durch den mittleren Teil des Gehäuses gebildet ist, der unten durch den oberen Teil des Speichers für das Reserve-Oxidationsmittel und oben durch ein Begrenzungsgitter begrenzt ist.

10. Stoffaustauschapparat nach Anspruch 10, **dadurch gekennzeichnet, dass** im Begrenzungsgitter Öffnungen ausgeführt sind.

11. Stoffaustauschapparat nach Anspruch 1, **dadurch gekennzeichnet, dass** das System zum Eintritt des oxidierten Materials durch den oberen Teil der Seitenwand des Speichers für das Reserve-Oxidationsmittel gebildet ist.

12. Stoffaustauschapparat nach Anspruch 1, **dadurch gekennzeichnet, dass** das System zum Austritt des oxidierten Materials durch das Begrenzungsgitter der Reaktionskammer und die Öffnungen in der Gehäusewand des Stoffaustauschapparates gebildet ist.

13. Stoffaustauschapparat nach Anspruch 13, **dadurch gekennzeichnet, dass** das System zum Austritt des oxidierten Materials oberhalb der Reaktionskammer liegt.

14. Stoffaustauschapparat nach Anspruch 1, **dadurch gekennzeichnet, dass** das Oxidationsmittel in fester Phase ausgeführt ist.

15. Stoffaustauschapparat nach Anspruch 1, **dadurch gekennzeichnet, dass** das Oxidationsmittel aus Einzelteilen bestehend ausgeführt ist.

16. Stoffaustauschapparat nach Anspruch 1, **dadurch gekennzeichnet, dass** granuliertes Bleioxid als Festphasen-Oxidationsmittel eingesetzt wird.

17. Stoffaustauschapparat nach jedwedem der vorangehenden Ansprüche 5, 6 und 11, **dadurch gekennzeichnet, dass** die Öffnungen als System von Schlitzen mit geringerer Breite als die Partikelgröße des Festphasen-Oxidationsmittels ausgeführt sind.

18. Stoffaustauschapparat nach Anspruch 1, **dadurch gekennzeichnet, dass** er im Behälter des oxidierten Materials horizontal liegt.

## Revendications

1. Appareil d'échange de masse comportant un corps, lequel corps incluant une chambre de réaction à écoulement remplie d'un agent d'oxydation, munie d'un système de chauffage réglable, et des systèmes d'entrée et de sortie d'un matériau à oxyder, **caractérisé en ce que** le corps dudit appareil est muni d'une réserve d'agent d'oxydation.

2. Appareil d'échange de masse selon la revendication 1, **caractérisé en ce que** ledit système de chauffage réglable représente un réchauffeur électrique, particulièrement celui du type tige.

3. Appareil d'échange de masse selon la revendication 2, **caractérisé en ce que** ledit réchauffeur électrique utilise un fil hautement résistif en nichrome ou en kanthal en tant qu'élément chauffant.

4. Appareil d'échange de masse selon la revendication 1, **caractérisé en ce que** ladite réserve d'agent d'oxydation est constituée d'un fond et d'un mur latéral formé par la partie basse du corps.

5. Appareil d'échange de masse selon la revendication 4, **caractérisé en ce que** la partie haute du mur latéral de ladite réserve d'agent d'oxydation, adjacent à la chambre de réaction, comporte des orifices.

6. Appareil d'échange de masse selon la revendication 4, **caractérisé en ce que** la partie basse du mur latéral de ladite réserve d'agent d'oxydation comporte des orifices.

7. Appareil d'échange de masse selon la revendication 1, **caractérisé en ce que** la réserve d'agent d'oxydation se place au-dessous de la chambre de réaction.

8. Appareil d'échange de masse selon la revendication 2, **caractérisé en ce que** la réserve d'agent d'oxydation se place au-dessous du bout inférieur du réchauffeur électrique.

9. Appareil d'échange de masse selon la revendication 1, **caractérisé en ce que** la chambre de réaction à écoulement est formée par la partie médiane du corps, ladite partie médiane étant délimitée en dessous par la partie haute de la réserve d'agent d'oxydation et en dessus - par une grille d'arrêt.

10. Appareil d'échange de masse selon la revendication 10, **caractérisé en ce que** ladite grille d'arrêt comporte des orifices.

11. Appareil d'échange de masse selon la revendication 1, **caractérisé en ce que** ledit système d'entrée du matériau à oxyder est formé par la partie haute du mur latéral de la réserve d'agent d'oxydation.

12. Appareil d'échange de masse selon la revendication 1, **caractérisé en ce que** ledit système de sortie du matériau à oxyder est formé par la grille d'arrêt de la chambre de réaction et par les orifices dans le mur du corps dudit appareil.

13. Appareil d'échange de masse selon la revendication 13, **caractérisé en ce que** le système de sortie du matériau à oxyder se place au-dessus de la chambre de réaction.

14. Appareil d'échange de masse selon la revendication 1, **caractérisé en ce que** l'agent d'oxydation est à l'état solide.

15. Appareil d'échange de masse selon la revendication 1, **caractérisé en ce que** l'agent d'oxydation est constitué de particules individuelles.

16. Appareil d'échange de masse selon la revendication 1, **caractérisé en ce que** l'oxyde de plomb granulé est utilisé en tant qu'agent d'oxydation.

17. Appareil d'échange de masse selon l'une quelconque des revendications 5, 6 et 11, **caractérisé en ce que** les orifices représentent un système de fentes dont la largeur est inférieure à la taille des particules de l'agent d'oxydation.

18. Appareil d'échange de masse selon la revendication 1, **caractérisé en ce que** ledit appareil s'installe horizontalement dans le réservoir du matériau à oxyder.
